# EUROPÄISCHE PATENTSCHRIFT

(11) **EP 1 218 954 B1**
(45) Veröffentlichungstag und Bekanntmachung des Hinweises auf die Patenterteilung: **14.05.2003**
(21) Anmeldenummer: 00960555.1
(22) Anmeldetag: 30.08.2000
(51) Int. Cl.: H01M 8/00

(54) **MEMBRAN FÜR EINE BRENNSTOFFZELLE UND VERFAHREN ZU IHRER HERSTELLUNG**
MEMBRANE FOR A FUEL CELL AND A METHOD FOR PRODUCING THE SAME
MEMBRANE POUR PILE A COMBUSTIBLE ET SON PROCEDE DE FABRICATION

(30) Priorität: 10.09.1999 DE 19943244
(43) Veröffentlichungstag der Anmeldung: 03.07.2002
(73) Patentinhaber: DaimlerChrysler AG, 70567 Stuttgart (DE)
(72) Erfinder: BIEGERT, Hubertus, 78089 Unterkirnach (DE); BRITZ, Peter, 35108 Allendorf/Eder (DE); TOTH, Gabor, 89257 Illertissen-Jedesheim (DE); URBAN, Peter, 92224 Amberg (DE)
(86) Internationale Anmeldenummer: EP0008465
(87) Internationale Veröffentlichungsnummer: WO01020700

(56) Entgegenhaltungen:
- EP-A- 0 631 337
- EP-A- 0 926 754
- WO-A-95/19222
- WO-A-98/11614
- US-A- 5 766 787

## Beschreibung

Die vorliegende Erfindung betrifft eine ionenleitfähige Polymer-Membran nach dem Oberbegriff des Anspruchs 1 sowie ein Verfahren zur Herstellung einer solchen Membran.

Ionenleitende Polymer-Elektrolytmembranen werden bei Brennstoffzellen als Membran zwischen Anode und Kathode eingesetzt. Dabei weisen herkömmliche Membranen zwecks ausreichender mechanischer Stabilität eine Mindestdicke von typischerweise mehr als 50µm auf. Die Ionenleitfähigkeit der Membran ist andererseits durch die Dicke der Membran begrenzt.

Sollen möglichst dünne Membranen hergestellt werden, so ist vorgeschlagen worden, das ionenleitende Polymer als dünne Schicht auf einen Träger abzuscheiden, welcher als Elektrode verwendet wird. Eine solche Membran-/Elektrodeneinheit ist z.B. in der EP-A-0 718 903 beschrieben.

Weiterhin sind in der WO-A-95/19222 Mikrokomposit-Polymere beschrieben, die dadurch hergestellt werden, dass eine Lösung eines polymerbildenden Kohlenwasserstoffmaterials, z.B. des unter dem Markennamen Nafion® erhältlichen fluorierten Kohlenwasserstoffs, mit einem Metallalkoxid, z.B. Tetramethoxysilan, gemischt und einem Sol-Gel-Verfahren unterzogen wird. Die Anteile an polymerbildendem Kohlenwasserstoffmaterial und Metallalkoxid sind hierbei so gewählt, dass bezogen auf das hergestellte Mikrokomposit-Polymerprodukt der Gewichtsanteil an fluoriertem Kohlenwasserstoffmaterial höchstens 80% und dementsprechend der Gewichtsanteil an Metallalkoxid mindestens etwa 20% beträgt.

Diese Polymere weisen nach einer Behandlung bei erhöhter Temperatur ein inneres Gerüst eines Metalloxids auf, welches zu einer deutlichen Vergrößerung der aktiven Oberfläche des Polymers führt. Die verwendeten Temperaturen sind jedenfalls teilweise so hoch, dass sie für die bei Brennstoffzellen verwendeten Polymerelektrolyt-Membranen nicht anwendbar sind. Es wird gesagt, dass diese Polymere eine deutliche Porosität mit Porendurchmessern bis zu 1000nm aufweisen.

In der Offenlegungsschrift EP 0 530 688 A2 ist ein Verfahren zum Erzeugen eines fluorierten Polymers mit Sulfonsäure-Seitengruppen auf einem Substrat beschrieben, bei dem das Substrat mit einer Lösung oder Dispersion benetzt wird, die das fluorierte Polymermaterial enthält, wonach das Lösungs- bzw. Dispersionsmittel ausgetrieben und das so erhaltene Produkt über die Glasübergangstemperatur des Polymers aufgeheizt wird, um das Polymer unlöslich zu machen. Bevorzugt liegen die dabei verwendeten Temperaturen zwischen 150°C und 300°C.

In der Offenlegungsschrift DE 43 12 126 A1 ist eine Gasdiffusionselektrode z.B. für Brennstoffzellen beschrieben, die eine gasdurchlässige, poröse Diffusionsbarriere umfasst, die in feinverteilter Form einen elektrisch leitenden Katalysator enthält und an ihrer Innenseite mit einer semipermeablen Membran beschichtet ist. Die Membranschicht besteht z.B. aus Polysulfon, Polyvinylidenfluorid, Polyamid oder Polyhydantoin, weist eine Dicke zwischen 100µm und 700µm auf und kann zusätzlich Füllstoffe enthalten, vorzugsweise in einem gegenüber dem Polymergehalt höheren Anteil. Der Füllstoff, z.B. Titandioxid, Zinkoxid, mikrokristalline Zellulose, Kieselsäure oder Aerosile (Fa. Degussa) werden zur Herstellung der Membran in eine Polymerlösung eindispergiert, die dann im Vakuum entgast und nach Auftragen auf ein Substrat in Wasser koaguliert und anschließend gewaschen und getrocknet wird. Eine in ähnlicher Weise aus einer polymerbildenden, Perflursulfonsäure enthaltenden Lösung, z.B. Nafion®, mit eingebrachten Siliziumdioxidpartikeln, z.B. in Form von Aerosil 200 (Fa. Degussa), hergestellte Membran ist in der Offenlegungsschrift EP 0 926 754 A1 offenbart, wobei in dieser Membran durch eine gesteuerte thermische Behandlung mit einer Temperatur über der Glasübergangstemperatur sowohl eine amorphe als auch eine kristalline Phase gebildet ist.

Der Erfindung liegt als technisches Problem die Bereitstellung einer ionenleitfähigen Polymerelektrolyt-Membran der eingangs genannten Art, die sich mit relativ geringem Aufwand und mit einer bei Bedarf vergleichsweise geringen Dicke in mechanisch stabiler, freitragender Form herstellen lässt, sowie eines hierfür geeigneten Herstellungsverfahrens zugrunde.

Die Erfindung löst dieses Problem durch die Bereitstellung einer ionenleitfähigen Polymer-Membran mit den Merkmalen des Anspruchs 1 und eines zugehörigen Herstellungsverfahrens mit den Merkmalen des Anspruchs 6.

Die erfindungsgemäße Membran weist zusätzlich zu dem ionenleitenden Polymer ein aus einem Metallalkoxid-Ausgangsstoff hydrolysiertes und/oder kondensiertes metallhaltiges Gel auf, welches in das Polymer eingelagert und/oder mit dem Polymer chemisch verbunden ist. Bezogen auf die Membran liegt der Anteil von Metallalkoxid zwischen 25% und 1%. Ein Gewichtsverhältnis mit mehr als 25% Metallalkoxid ergibt eine Membran, welche zu spröde für eine freitragende Membran ist. Ein Gewichtsverhältnis mit weniger als 1% Metallalkoxid führt zu einer Membran, die zu weich für eine freitragende Membran ist.

Ein bevorzugtes Metallalkoxid ist Tetraetoxysilan; bevorzugte polymerbildende Kohlenwasserstoffmaterialien sind fluorierte Kohlenwasserstoffe, wie Nafion®.

Die erfindungsgemäße Membran kann freitragend mit einer Dicke nur etwa 5µm hergestellt werden, wobei auch größere Dicken von z.B. bis etwa 100µm möglich sind.

Das erfindungsgemäße Herstellungsverfahren beinhaltet die Bildung der Membran durch einen Prozeß ähnlich einem herkömmlichen Sol-Gel-Prozeß, wobei die Lösung aus dem polymerbildenden Kohlenwasserstoffmaterial und dem Metallalkoxid zu einem Kompositgel umgesetzt wird. Dabei bildet sich durch Hydrolyse und/oder Kondensation aus dem Metallalkoxid ein metallhaltiges Gel, das ein metallhaltiges Gittergerüst beinhaltet, welches der Membran eine gewisse, gewünschte Festigkeit verleiht, ohne dass diese andererseits zu spröde ist.

Besonders vorteilhaft ist, daß die Protonenleitfähigkeit und die Rückfeuchtung der Membran deutlich verbessert ist.

In einer vorteilhaften Ausgestaltung der Erfindung ist die zusätzliche Zugabe eines Stellmittels vorgesehen, z.B. das unter dem Markennamen Aerosil P200 von der Firma Degussa erhältliche Stellmittel. Durch diesen Zusatz an Stellmittel kann die Porenstruktur der Membran in vorteilhafter Weise dahingehend verändert werden, dass der Wassertransport durch die Membran verbessert wird und Wasser in der Membran merklich besser gehalten werden kann. Dadurch ist die Membran bereits bei Betriebsaufnahme der Brennstoffzelle direkt befeuchtet und gewährleistet von Anfang an eine optimale Ionenleitfähigkeit. Zudem reicht das im Brennstoffzellenbetrieb kathodenseitig gebildete Produktwasser zur Befeuchtung der Polymerelektrolyt-Membran aus, so dass eine zusätzliche Wasserzugabe zu den Reaktionsgasen der Brennstoffzelle entfallen kann und dementsprechend in mobiler Anwendung in Brennstoffzellenfahrzeugen nicht unbedingt ein zusätzlicher Wassertank mitgeführt werden muß.

Weitere Vorteile und Ausgestaltungen der Erfindung ergeben sich aus der Beschreibung und den weiteren Unteransprüchen. Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Eine vorteilhafte Ausführungsform der Erfindung wird nachfolgend beschrieben, speziell die Herstellung einer erfindungsgemäßen freitragenden Polymerelektrolyt-Membran mit Hilfe eines Sol-Gel-artigen Prozesses.

Eine handelsübliche Polymer-Lösung von 5% Nafion® in Isopropanol/Wasser (Nafion®111, Hersteller DuPont de Nemours) wird mit einem Metallalkoxid, vorzugsweise Tetraetoxysilan, bei Raumtemperatur kurz gemischt und auf einen Zwischenträger gestrichen. Die Lösung kann auch optional aufkonzentriert werden, indem die Lösung in einem Verdampfer, bevorzugt einem Rotationsverdampfer, behandelt wird. Optional wird ein Stellmittel hinzugegeben, z.B. das von der Fa. Degussa vertriebene Stellmittel Aerosil P200.

Das in der Polymer-Lösung enthaltene Wasser reagiert durch Hydrolyse und Kondensation mit dem Metallalkoxid und bildet ein Gel, bei dem die Alkoxidgruppe am Metall (bzw. Silizium) durch Sauerstoff ersetzt ist. Die Membranen werden leicht vom Träger abgelöst und liegen nunmehr als freitragende Membranen vor. Anschließend wird bei einer Temperatur von 120°C das Polymer derart umgebildet, daß sich protonenleitende Eigenschaften ausbilden können, bevorzugt wird die Membran für eine Stunde der Temperatur ausgesetzt. Im Gegensatz zum üblichen Sol-Gel-Verfahren fehlt der Ausheilschritt bei hoher Temperatur, so daß neben dem Metalloxidgerüst noch Gel im Polymer vorhanden ist.

Membranen können so freitragend mit einer Dicke von bis z.B. 50µm hergestellt werden. Bevorzugte Anteile der beteiligten Materialien sind im folgenden angegeben, wobei die Prozentangaben jeweils gewichtsbezogen sind. Dabei soll die Summe der Polymer-/Metallalkoxidanteile nominell zusammen 100% (Gewichtsprozent) ergeben, unabhängig davon, ob noch weitere Zusätze in der Membran vorhanden sind. Membranen, die demgemäß mit 95% Nafion® und 5% Tetraetoxysilan hergestellt sind, können z.B. schon mit Dicken im Bereich zwischen nur etwa 5 bis 15 µm realisiert werden, bevorzugt mit Dicken um 10 µm. Diese freitragenden Membranen sind thermisch und mechanisch gut belastbar und für die Verwendung bei einer Brennstoffzelle gut geeignet. Anwendungsbedingt kann eine Membrandicke von bis zu 40µm oder auch bis zu 100µm gewünscht sein. Bei diesen dickeren Membranen kann der Gehalt an Metallalkoxid auf bis zu 1 Gewichtsprozent reduziert werden. Bei dünneren Schichten ist ein etwas höherer Anteil an Metallalkoxid günstig, um eine ausreichende mechanische Stabilität zu erreichen.

Es zeigt sich, daß bei einem Metallalkoxidgehalt oberhalb von ca. 10% die Membranen zunehmend spröde werden, während bei einem Metallalkoxidgehalt unterhalb von ca. 1% die Membranen zunehmend weich und wenig mechanisch belastbar werden. Dabei kann, bei vergleichbarer mechanischer Stabilität, für dickere Membranen der Gehalt an Metallalkoxid geringer sein als für dünnere Membranen.

Bevorzugt ist demgemäß ein Gehalt an Metallalkoxid von höchstens 25% und mindestens 1%, besonders bevorzugt ist ein Bereich von höchstens 7% und mindestens 3%. Bei Dicken von etwa 30 µm bis 50 µm und mehr können die Metallalkoxidgehalte durchaus auch geringer als 3% sein.

Bezogen auf die Membran liegt ein bevorzugtes Gewichtsverhältnis zwischen Polymer und Metallalkoxid im Bereich zwischen 75% Polymer / 25% Metallalkoxid und 99% Polymer / 1% Metallalkoxid.

Bezogen auf die Membran liegt ein weiteres bevorzugtes Gewichtsverhältnis zwischen Polymer und Metallalkoxid im Bereich zwischen 90% Polymer / 10% Metallalkoxid und 99% Polymer / 1% Metallalkoxid.

Der Metallalkoxidgehalt beeinflußt nicht nur die Festigkeit und/oder Sprödigkeit der Membran, sondern auch die Hydrophobizität der Membran, die dazu führt, daß sich die Membran bei der Herstellung vom Zwischenträger ablösen läßt. Das Verfahren ist demnach auch vorteilhaft für dickere Membranen, bei denen die Herstellung freitragender Membranen an sich nicht problematisch ist.

Eine Sol-Gel-Reaktion wie im eingangs zitierten Stand der Technik beschrieben führt entweder wegen der angewendeten hohen Temperaturen und/oder aufgrund der wesentlich höheren Anteile an Metallalkoxiden zu sehr spröden und auch porösen Polymer-Kompositen, die für eine erfindungsgemäße freitragende dünne Membran für eine Brennstoffzelle nicht geeignet sind.

Weitere bevorzugte erfindungsgemäße Membranen mittels des Sol-Gel-Prozesses lassen sich herstellen, indem statt Tetraetoxysilan andere Metallalkoxide, z.B. titan- oder zirkonhaltige Metallalkoxide verwendet werden. Es können auch anorganische Bestandteile, vorzugsweise SiO₂, TiO₂, ZrO₂ und/oder Al₂O₃, in eine solche Membran eingebaut werden. Dadurch können neben den mechanischen Eigenschaften auch andere Eigenschaften von Membranen gezielt beeinflußt werden, vorzugsweise die Selektivität der Membran etwa für Protonen und/oder die Permeabilität für durch die Membran transportierte Stoffe wie etwa H₂O und/oder Methanol, und/oder der Wasserhaushalt der Membran.

Was den Wasserhaushalt der Membran anbetrifft, so lässt sich dieser besonders auch mit der erwähnten optionalen Zugabe des Stellmittels verbessern. Das Stellmittel, wie Aerosil P200, wird hierbei vorzugsweise in einem Gewichtsanteil zwischen 0,5% und 1% bezogen auf die Membran hinzugefügt. Es beeinflusst die Porenstruktur der Membran derart, dass der Wassertransport durch die Membran hindurch deutlich verbessert wird und Wasser deutlich besser in der Membran gehalten werden kann. Die Membran ist auf diese Weise bei Betriebsaufnahme der Brennstoffzelle direkt ausreichend befeuchtet und gewährleistet eine optimale ionenleitfähigkeit. Das im Brennstoffzellenbetrieb kathodenseitig anfallende Produktwasser reicht aus, die Membran feucht zu halten, ohne dass den Reaktionsgasen zusätzliches Wasser zugegeben werden muß. Das Mitführen eines zusätzlichen Wassertanks für diesen Zweck in Brennstoffzellen ist dann nicht erforderlich.

Das Stellmittel Aerosil P200 kann der Reaktionsmischung vor dem Gelbildungsprozeß z.B. in einer in Wasser/Isopropanol dispergierten Form zugegeben werden. Das Stellmittel lagert sich dann in die Membran ein und vergrößert deren Porenstruktur. Es ist zudem hydrophil und begünstigt dadurch die Ionenleitfähigkeit der in diesem Fall ternären Kompositmembran.

## Patentansprüche

1. Ionenleitfähige Polymer-Membran für eine Brennstoffzelle, wobei die Polymer-Membran aus einem polymerbildenden Kohlenwasserstoffmaterial gebildet ist,
**dadurch gekennzeichnet, dass**
die Membran zusätzlich ein aus einem Metallalkoxid-Ausgangsstoff hydrolysiertes und/oder kondensiertes metallhaltiges Gel aufweist, welches in das Polymer eingelagert und/oder mit dem Polymer chemisch verbunden ist, wobei bezogen auf die Membran der Gewichtsanteil von Metallalkoxid zwischen 25% und 1% liegt.

2. Ionenleitfähige Polymer-Membran nach Anspruch 1,
**dadurch gekennzeichnet, dass**
bezogen auf den Gehalt an polymerbildendem Kohlenwasserstoffmaterial und Metallalkoxid die Membran mit einem Gewichtsanteil von etwa 75% bis 99% polymerbildendem Kohlenwasserstoffmaterial und 25% bis 1% Metallalkoxid gebildet ist.

3. Ionenleitfähige Polymer-Membran nach Anspruch 1 oder 2,
**dadurch gekennzeichnet, dass**
die Dicke der Membran höchstens 100µm, bevorzugt zwischen 5 und 30µm, beträgt.

4. Ionenleitfähige Polymer-Membran nach einem der Ansprüche 1 bis 3,
**dadurch gekennzeichnet, dass**
die Membran zusätzlich ein vor der Bildung des metallhaltigen Gels aus dem Metallalkoxid-Ausgangsstoff eingebrachtes Stellmittel enthält.

5. Ionenleitfähige Polymer-Membran nach Anspruch 4,
**dadurch gekennzeichnet, dass**
bezogen auf die Membran der Gewichtsanteil des Stellmittels zwischen 0,5% und 1% liegt.

6. Verfahren zur Herstellung einer ionenleitfähigen Polymer-Membran nach einem der vorangegangenen Ansprüche 1 bis 5,
**dadurch gekennzeichnet, dass**
eine Wasser enthaltende Lösung eines polymerbildenden Kohlenwasserstoffmaterials zumindest mit einem Metallalkoxid vermischt und auf einen Zwischenträger aufgetragen wird und die sich dabei bildende Membran anschließend vom Zwischenträger abgelöst und zur Ausbildung von ionenleitenden Eigenschaften des Polymers bei einer Temperatur zwischen Raumtemperatur und 150°C behandelt wird, wobei der Metallalkoxidgehalt bezogen auf den Gehalt an Polymer und Metallalkoxid der Membran zwischen 10 und 1 Gewichtsprozent liegt.

7. Verfahren nach Anspruch 6,
**dadurch gekennzeichnet, dass**
zu der Lösung mit dem polymerbildenden Kohlenwasserstoffmaterial zusätzlich zu dem Metallalkoxid ein Stellmittel zugegeben wird, bevorzugt in einem Gewichtsanteil bezogen auf die Membran zwischen 0,5% und 1%.

8. Verfahren nach Anspruch 6 oder 7,
**dadurch gekennzeichnet, dass**,
die Lösung bei einer Temperatur nahe Raumtemperatur mit dem Kohlenwasserstoff verrührt wird.

9. Verfahren nach einem der Ansprüche 6 bis 8,
**dadurch gekennzeichnet, dass**
die Membran bei etwa 120°C zur Ausbildung von ionenleitenden Eigenschaften des Polymers behandelt wird.

10. Verfahren nach einem der Ansprüche 6 bis 9,
**dadurch gekennzeichnet, dass**
die Lösung vor dem Verrühren in einem Verdampfer erhitzt wird, um den Gehalt der Lösung an Kohlenwasserstoff zu erhöhen.

## Claims

1. Ion-conductive polymer membrane for a fuel cell, the polymer membrane being formed from a polymer-forming hydrocarbon material, **characterized in that** the membrane further comprises a metallic gel which is condensed and/or hydrolysed from a metal alkoxide starting material and is inserted into the polymer and/or chemically joined to the polymer, the weight fraction of metal alkoxide being between 25% and 1% based on the membrane.

2. Ion-conductive polymer membrane according to Claim 1, **characterized in that**, based on the amount of polymer-forming hydrocarbon material and metal alkoxide, the membrane is formed with a weight fraction of from about 75% to 99% of polymer-forming hydrocarbon material and from 25% to 1% of metal alkoxide.

3. Ion-conductive polymer membrane according to Claim 1 or 2, **characterized in that** the thickness of the membrane is not more than 100 µm, preferably between 5 and 30 µm.

4. Ion-conductive polymer membrane according to one of Claims 1 to 3, **characterized in that** the membrane further comprises a modifier which is introduced before the metallic gel is formed from the metal alkoxide starting material.

5. Ion-conductive polymer membrane according to Claim 4, **characterized in that**, based on the membrane, the weight fraction of the modifier is between 0.5% and 1%.

6. Process for producing an ion-conductive polymer membrane according to one of the preceding Claims 1 to 5, **characterized in that** a water-containing solution of a polymer-forming hydrocarbon material is mixed at least with one metal alkoxide and the mixture is applied to an intermediate support and then the membrane which forms is detached from the intermediate support and is treated at a temperature between room temperature and 150°C for ion-conducting properties of the polymer to develop, the metal alkoxide content being between 10 and 1 per cent by weight based on the amount of polymer and metal alkoxide.

7. Process according to Claim 6, **characterized in that** in addition to the metal alkoxide a modifier is added to the solution with the polymer-forming hydrocarbon material, preferably in a weight fraction of between 0.5% and 1% based on the membrane.

8. Process according to Claim 6 or 7, **characterized in that** the solution is stirred together with the hydrocarbon at a temperature close to room temperature.

9. Process according to one of Claims 6 to 8, **characterized in that** the membrane is treated at about 120°C for ion-conducting properties of the polymer to develop.

10. Process according to one of Claims 6 to 9, **characterized in that**, prior to stirring, the solution is heated in an evaporator in order to increase the hydrocarbon content of the solution.

## Revendications

1. Membrane polymère apte à une conductibilité ionique pour une pile à combustible, la membrane polymère étant formée à partir d'un matériau d'hydrocarbure formant un polymère, **caractérisée en ce que** la membrane présente en outre un gel contenant un métal, hydrolysé et/ou condensé à partir d'une substance alcoxyde de métal de départ, qui est incorporé dans le polymère et/ou lié chimiquement au polymère, la proportion pondérale d'alcoxyde de métal étant située entre 25% et 1% par rapport à la membrane.

2. Membrane polymère apte à une conductibilité ionique selon la revendication 1, **caractérisée en ce que** la membrane est formée avec une proportion pondérale d'environ 75% à 99% de matériau d'hydrocarbure formant un polymère et 25% à 1% d'alcoxyde de métal par rapport à la teneur en matériau d'hydrocarbure formant un polymère et en alcoxyde de métal.

3. Membrane polymère apte à une conductibilité ionique selon la revendication 1 ou 2, **caractérisée en ce que** l'épaisseur de la membrane est d'au maximum 100 µm, de préférence entre 5 et 30 µm.

4. Membrane polymère apte à une conductibilité ionique selon l'une quelconque des revendications 1 à 3, **caractérisée en ce que** la membrane contient en outre un agent de fixation introduit avant la formation du gel contenant un métal à partir de la substance alcoxyde de métal de départ.

5. Membrane polymère apte à une conductibilité ionique selon la revendication 4, **caractérisée en ce que** la proportion pondérale en agent de fixation est située entre 0,5% et 1% par rapport à la membrane.

6. Procédé pour la fabrication d'une membrane polymère apte à une conductibilité ionique selon l'une quelconque des revendications précédentes 1 à 5, **caractérisé en ce qu'**une solution contenant de l'eau d'un matériau d'hydrocarbure formant un polymère est mélangée au moins avec un alcoxyde de métal et appliquée sur un support intermédiaire et la membrane qui se forme est ensuite détachée du support intermédiaire et traitée pour la formation des propriétés de conductibilité ionique du polymère à une température entre la température ambiante et 150°C, la teneur en alcoxyde de métal étant située entre 10 et 1% en poids par rapport à la teneur en polymère et alcoxyde de métal de la membrane.

7. Procédé selon la revendication 6, **caractérisé en ce qu'**un agent de fixation est ajouté à la solution avec le matériau d'hydrocarbure formant un polymère en plus de l'alcoxyde de métal, de préférence dans une proportion pondérale par rapport à la membrane entre 0,5% et 1%.

8. Procédé selon la revendication 6 ou 7, **caractérisé en ce que** la solution est mélangée par agitation à l'hydrocarbure à une température proche de la température ambiante.

9. Procédé selon l'une quelconque des revendications 6 à 8, **caractérisé en ce que** la membrane est traitée à environ 120°C pour la formation des propriétés de conductibilité ionique du polymère.

10. Procédé selon l'une quelconque des revendications 6 à 9, **caractérisé en ce que** la solution est chauffée avant le mélange par agitation dans un évaporateur, afin d'augmenter la teneur en hydrocarbure de la solution.
